# EUROPÄISCHE PATENTANMELDUNG

(11) **EP 0 917 951 A1**
(43) Veröffentlichungstag der Anmeldung: **26.05.1999**
(21) Anmeldenummer: 98120963.8
(22) Anmeldetag: 05.11.1998
(51) Int. Cl.: B32B 15/01, H01R 13/03

(54) **Elektrisch leitfähiges Metallband und Steckverbinder daraus**

(30) Priorität: 22.11.1997 DE 19751841
(71) Anmelder: STOLBERGER METALLWERKE GMBH & CO. KG, D-52222 Stolberg (DE)
(72) Erfinder: Rumbach, Albert Dipl.-Ing., 52076 Aachen (DE); Adler, Udo Dipl.-Ing., 52224 Stolberg (DE)

(57) **Zusammenfassung**

Die Erfindung betrifft ein elektrisch leitfähiges Metallband zur Fertigung von elektrischen Kontaktbauteilen, insbesondere Steckverbindern, mit einem Kernband aus einem Kupferwerkstoff und einer mindestens einseitig walzplattierten Metallauflage aus einer Kupfer-Nickel-Zink-Legierung (Neusilber). Das Kernband besitzt eine elektrische Leitfähigkeit von mindestens 20 m/Ωmm². Die Kombination von Kupferwerkstoff und Neusilber als Metallauflage ergibt ein Metallband hoher elektrischer Leitfähigkeit, dessen mechanische Oberflächeneigenschaften denen von Neusilber entsprechen.

## Beschreibung

Die Erfindung betrifft ein elektrisch leitfähiges Metallband zur Fertigung von elektrischen Kontaktbauteilen sowie einen Steckverbinder.

Bänder aus Kupferwerkstoffen mit Beschichtungen aus unterschiedlichen Metallen bzw. Metallegierungen werden bei der Fertigung von Massenteilen in der elektronischen und elektrischen Industrie aus wirtschaftlichen und technischen Gründen weit verbreitet eingesetzt. Aus einem solchen Vormaterial werden beispielsweise Anschlußklemmen, Leiterbahnen oder Steckverbinder in verschiedener Form und andere Verbindungsteile hergestellt.

Kupferwerkstoffe kommen hierbei wegen ihrer hohen elektrischen Leitfähigkeit zum Einsatz. Zum Schutz gegen Korrosion und Verschleiß sowie zur Erhöhung der Oberflächenhärte wird der Kupferwerkstoff mit einem metallischen Überzug versehen, wobei in der Regel Zinn als Überzugsmetall verwendet wird. Üblich ist eine galvanische Beschichtung oder der Auftrag der Beschichtung im Schmelztauchverfahren.

Generell werden an die elektrischen Kontaktbauteile hohe technische und qualitative Anforderungen, insbesondere hinsichtlich der mechanischen und elektrischen Eigenschaften gestellt. Dies gilt insbesondere beim Einsatz der Kontaktbauteile unter schwierigen oder aggressiven Umgebungsbedingungen, beispielsweise für Steckverbinder in der Kraftfahrzeugelektrik und hier vor allem in der Motorelektronik.

Unter solch schwierigen Umgebungsbedingungen können Anforderungen auftreten, vor allem hinsichtlich der Temperatur- oder Relaxationsbeständigkeit und der Korrosionsfestigkeit, denen elektrische Kontaktbauteile bekannten Aufbaus nicht mehr oder nur bedingt gerecht werden können. So findet beispielsweise der Einsatz von bekannten Beschichtungswerkstoffen, wie Zinn, Silber oder Gold und deren Legierungen, bei einer Temperatur von maximal 150° C seine Grenze.

Die Erfindung hat sich daher die Aufgabe gestellt, ein elektrisch leitfähiges Metallband zur Fertigung von elektrischen Kontaktbauteilen, insbesondere von Steckverbindern, bereitzustellen mit einer hohen Temperatur- und Relaxationsbeständigkeit, Abriebfestigkeit und Härte bei guter Umformbarkeit und Duktilität.

Die Lösung dieser Aufgabe besteht nach der Erfindung in den Merkmalen des Anspruchs 1.

Danach besteht das elektrisch leitfähige Metallband aus dem Verbund eines Kernbands aus einem Kupferwerkstoff und einer mindestens einseitig walzplattiert aufgebrachten Metallauflage aus einer Kupfer-Nickel-Zink-Legierung (Neusilber).

Die Verwendung eines Kupferwerkstoffes für das Kernband gewährleistet eine sehr gute hohe elektrische Leitfähigkeit. In der Kombination mit Neusilber, welches durch den walzplattierten Auftrag mit dem Kernband einen innigen Verbund ergibt, wird eine Temperaturbeständigkeit des Metallbands auch oberhalb von 150° C, eine gute Abriebfestigkeit und Härte sichergestellt, und zwar bei Gewährleistung einer guten Umformbarkeit, Duktilität und Federeigenschaften. Auch die Gefahr von Reibkorrosion bei den aus dem erfindungsgemäßen Metallband hergestellten Kontaktbauteilen wird verringert.

Das Kernband besteht vorzugsweise aus einem Werkstoff mit einer elektrischen Leitfähigkeit von mindestens 20 m/Ωmm², wie dies Anspruch 2 vorsieht.

Hierbei kann es sich beispielsweise um einen niedrig legierten Kupferwerkstoff, um Kupfer-Eisen-Legierungen oder um Reinkupfer handeln. Die chemische Zusammensetzung von für die Praxis besonders gut als Werkstoff für das Kernband geeigneten Werkstoffen ist in der nachfolgenden Tabelle 1 zusammengestellt.

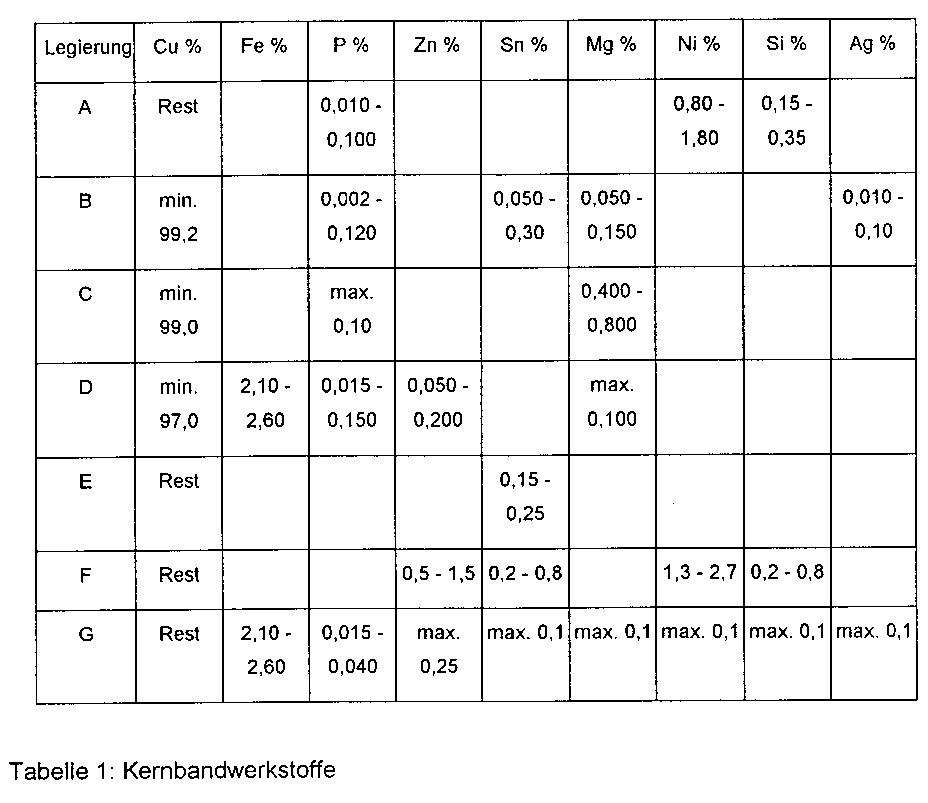

Die elektrische Leitfähigkeit dieser Kernbandwerkstoffe liegt zwischen 23 m/Ωmm² und 45 m/Ωmm².

Besonders vorteilhafte Werkstoffe für die Metallauflage bilden Gegenstand der Ansprüche 3 bis 5, deren chemische Zusammensetzung in der Tabelle 2 angegeben ist.

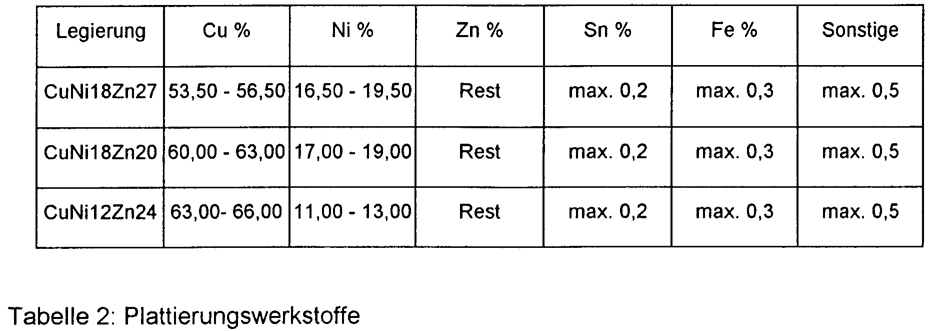

Die Metallauflage wird durch Walzplattieren hergestellt, und zwar vorzugsweise mittels Kaltwalzplattieren. Die metallische Verbindung zwischen Kernband und Metallauflage sichert einen zuverlässigen elektrischen Kontakt mit guter Wärmeleitung an der Verbindungsstelle, und zwar bei genauer Maßhaltigkeit.

Grundsätzlich kann eine einseitige oder eine doppelseitige Plattierung des Kernbands vorgenommen werden. Bei einer doppelseitigen Plattierung können auf den beiden Seiten des Kernbands auch unterschiedliche Werkstoffe aufgetragen werden.

Je nach Beanspruchung und Festigkeit werden die Auflagen in verschiedenen Dicken aufgebracht.

Das Walzen erfolgt in bekannter Weise unter Zugabe einer Walzemulsion. Vor dem Plattieren wird die Oberfläche des Kernbands aufgerauht. Dies kann durch Bürsten, Strahlen oder Beizen erfolgen. Im Anschluß an das Walzplattieren wird das Metallband wärmebehandelt. Insbesondere durch ein zusätzliches Diffusionsglühen wird die Erzielung eines dichten, fest anhaftenden Überzugs unterstützt.

Nach den Merkmalen des Anspruchs 6 beträgt die Dicke der Metallauflage zwischen 3 und 10% der Gesamtdicke des Metallbands.

Hierdurch kann ein Metallband geschaffen werden, welches sich hinsichtlich der Oberflächeneigenschaften, Korrosions- bzw. Anlaufbeständigkeit und Abriebfestigkeit wie ein massives Band aus Neusilber verhält, jedoch eine wesentlich höhere elektrische Leitfähigkeit besitzt. Darüber hinaus weist das erfindungsgemäße Metallband eine sehr hohe Temperaturbeständigkeit von über 150° C auf. Praktische Versuchen haben gezeigt, daß die Relaxationsbeständigkeit bzw. die Federeigenschaften auch nach längerer statischer oder dynamischer Belastung sehr gut sind.

Ein qualitativ hochwertiges und wirtschaftlich realisierbares Metallband läßt sich durch Verwendung eines Kernbands mit einer Dicke von 3 bis 4 mm erzielen, welches mit einem Plattierband aus Neusilber mit einer Banddicke von 0,15 mm bis 0,20 mm beschichtet wird. Nach dem Walzplattieren hat das Metallband je nach vorgenommenem Abwalzgrad eine Gesamtdicke zwischen 0,10 bis 1,5 mm.

Insbesondere bei elektrischen Steckverbindern aus dem erfindungsgemäßen Metallband kann der Einsatzbereich durch die Verbesserung der Temperaturbeständigkeit in Kombination mit den guten mechanischen und elektrischen Eigenschaften des Werkstoffverbunds vergrößert werden. Solche Steckverbinder sind in der Lage, über einen langen Zeitraum unter vorhandenen mechanischen, elektrischen und klimatischen Umweltbedingungen zuverlässig und häufig wiederholbar sowohl eine elektrische Verbindung herzustellen als auch sicher zu trennen.

## Patentansprüche

1. Elektrisch leitfähiges Metallband zur Fertigung von elektrischen Kontaktbauteilen, insbesondere Steckverbindern, mit einem Kernband aus einem Kupferwerkstoff und einer mindestens einseitig walzplattierten Metallauflage aus einer Kupfer-Nickel-Zink-Legierung.

2. Metallband nach Anspruch 1, **dadurch gekennzeichnet**, daß das Kernband eine elektrische Leitfähigkeit von mindestens 20 m/Ωmm² besitzt.

3. Metallband nach Anspruch 1 oder 2, **dadurch gekennzeichnet**, daß die Metallauflage aus CuNi18Zn27 besteht.

4. Metallband nach Anspruch 1 oder 2, **dadurch gekennzeichnet**, daß die Metallauflage aus CuNi18Zn20 besteht.

5. Metallband nach Anspruch 1 oder 2, **dadurch gekennzeichnet**, daß die Metallauflage aus CuNi12Zn24 besteht.

6. Metallband nach einem der Ansprüche 1 bis 5, **dadurch gekennzeichnet**, daß die Dicke der Metallauflage 3% bis 10% der Gesamtdicke beträgt.

7. Steckverbinder aus einem Metallband nach einem der Ansprüche 1 bis 6.
